# EUROPEAN PATENT SPECIFICATION

(11) **EP 4 481 524 B1**
(45) Date of publication and mention of the grant of the patent: **17.12.2025**
(21) Application number: 24182568.6
(22) Date of filing: 17.06.2024
(51) Int. Cl.: G05D 1/00, G05D 1/243, G05D 1/648, G05D 105/15, G05D 107/20, G05D 109/10, G05D 111/10

(54) **CONTROL METHOD FOR SELF-MOVING DEVICE AND SELF-MOVING DEVICE**
STEUERUNGSVERFAHREN FÜR SELBSTBEWEGENDE VORRICHTUNG UND SELBSTBEWEGENDE VORRICHTUNG
PROCÉDÉ DE COMMANDE POUR DISPOSITIF AUTOMOTEUR ET DISPOSITIF AUTOMOTEUR

(30) Priority: 19.06.2023 CN 202310729104
(43) Date of publication of application: 25.12.2024
(73) Proprietor: Suzhou Cleva Precision Machinery & Technology Co., Ltd., Suzhou, Jiangsu 215000 (CN)
(72) Inventor: Zhu, Shaoming, Suzhou, 215000 (CN); Ren, Xue, Suzhou, 215000 (CN); Yuan, Lichao, Suzhou, 215000 (CN)
(74) Representative: Murgitroyd & Company

(56) References cited:
- US-A1- 2008 109 126
- US-A1- 2021 136 993

## Description

### TECHNICAL FIELD

Embodiments of the present invention relate to the technical field of path planning, in particular to a control method for a self-moving device and a self-moving device.

### BACKGROUND

Visual self-moving devices do not require wiring and installation instructions, and can be used upon placement. Among visual self-moving devices, such as monocular visual robot mowers, are typically equipped with ultrasonic module to prevent collision with obstacles like hedges or flowers that are not easily recognized by a visual module. The visual self-moving devices usually adopt a random mowing mode, which has low traversal efficiency, so grass in some places is missed. However, the missed grass is high enough to be easily recognized as obstacles by ultrasonic module. Therefore, such grass will be left and gradually spread to surrounding areas.

US 2021/136993 A1 discloses a system and method for controlling a soil working means such as a robot mower which involves analyzing a captured image using a convolution operation and a trained neural network to identify the presence of features including uncut grass.

### SUMMARY

The technical problem to be solved by the present invention is to provide a control method for a robot mower and a robot mower to achieve effective and timely processing of missed grass.

To solve the above technical problem, according to one aspect of the present invention, a control method for a robot mower according to claim 1 is provided.

According to another aspect of the present invention, a robot mower according to claim 6 is provided.

Compared with existing technologies, in the present invention, an image of an area in a forward direction of the robot mower is obtained in the moving process of the robot mower in a designated area; and the image is processed to determine whether a predetermined object in the area in the forward direction of the robot mower includes missed grass, and to control the robot mower to move towards a direction in which one portion includes the missed grass to process the missed grass, so as to process missed grass in an effective and timely manner and prevent the missed grass from growing taller and spreading to require manual processing.

It should be understood that the content described in this section is not intended to identify key or important features of embodiments of the present invention, nor is it intended to limit the scope of the present invention. Other features of the present invention will be easily understood through the following description.

### BRIEF DESCRIPTION OF THE DRAWINGS

In order to illustrate the technical solutions of the embodiments of the present invention more clearly, the accompanying drawings required for use in the embodiments will be introduced briefly below. It should be understood that the following drawings show only some embodiments of the present invention and therefore should not be regarded as limiting the scope, and other relevant drawings can be derived based on the accompanying drawings by those of ordinary skill in the art without any creative efforts.
FIG. 1 is a flowchart of a control method for a robot mower in an embodiment of the present invention;
FIG. 2 is a flowchart of implementation steps of step S2 in an embodiment of the present invention;
FIG. 3 is a flowchart of implementation steps of step S21 in an embodiment of the present invention;
FIG. 4 is a flowchart of implementation steps of step S22 in an embodiment of the present invention;
FIG. 5 is a flowchart of obtaining a thresholded image in an embodiment of the present invention;
FIG. 6 is another flowchart of implementation steps of step S22 in an embodiment of the present invention; and
FIG. 7 is a schematic structural diagram of a robot mower implementing the embodiments of the present invention.

### DETAILED DESCRIPTION OF THE EMBODIMENTS

In order to make those skilled in the art understand the solutions of the present invention better, the following will clearly and completely describe the technical solutions in the embodiments of the present invention with reference to the accompanying drawings in the embodiments of the present invention. Apparently, the described embodiments are merely some rather than all of the embodiments of the present invention. Based on the embodiments in the present invention, all other embodiments obtained by those of ordinary skill in the art without any creative efforts shall fall within the scope of protection of the present invention.

Notably, the terms "first", "second", and the like in the description, claims, and accompanying drawings of the present invention are used for distinguishing similar objects and do not need to be used for describing a specific order or sequence. Understandably, the data used in such a way are interchangeable in proper circumstances, so that the embodiments of the present invention described herein can be implemented in other orders than the order illustrated or described herein. In addition, the terms "include", "have", and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, system, product, or device.

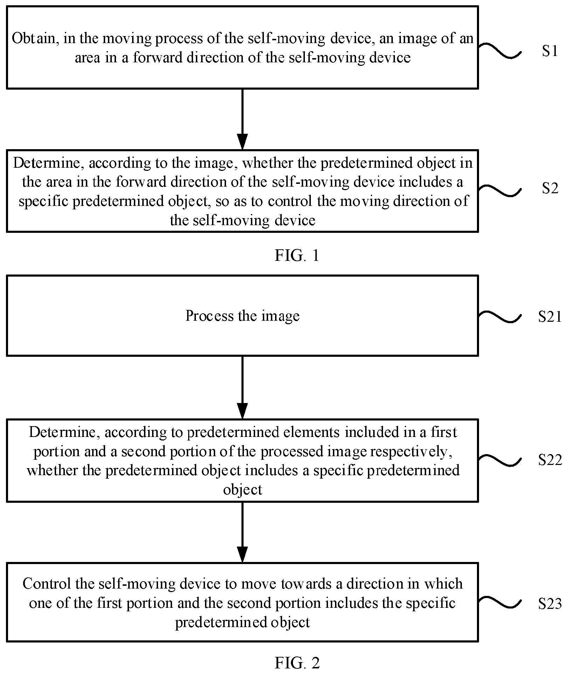

FIG. 1 is a flowchart of a control method for a robot mower in an embodiment of the present invention. This embodiment is applicable to a situation where the robot mower is controlled to move in a designated area to process grass in the designated area. As shown in FIG. 1, the method specifically includes the following steps:
S1. Obtain, in the moving process of the robot mower, an image of an area in a forward direction of the robot mower.

The designated area is an area where the robot mower needs to cut grass.

In this embodiment, the image is captured by a visual module on the robot mower. The visual module on the robot mower includes a first image module and a second image module. That is, a binocular visual module is disposed on the robot mower in this embodiment. In the moving process of the robot mower, a first image of the area in the forward direction of the robot mower is obtained using the first image module, and a second image of the area in the forward direction of the robot mower is obtained using the second image module. The images have multiple characteristics, such as hue (H), saturation (S), and value (V).

S2. Determine, according to the image, whether the predetermined object in the area in the forward direction of the robot mower includes missed grass, so as to control the moving direction of the robot mower.

In this embodiment, the missed grass is on the area where the robot mower needs to cut grass, where the missed grass is higher than surrounding grass.

Specifically, the first image and second image obtained above are processed to obtain a processed image firstly. Statistics on quantities of pixels with values greater than a set threshold in both the first portion and the second portion of the processed image, are collected, and whether the predetermined object includes a specific predetermined object is determined according to the statistical results. Finally, the robot mower is controlled to move towards the direction in which one of the first portion and the second portion that includes the specific predetermined object.

The processing includes parallax processing, edge extraction, and may include color segmentation and the like. When it is determined that missed grass is included, the robot mower is controlled to move directly towards the missed grass for cutting or fixed-point spiral cutting.

FIG. 2 is a flowchart of implementation steps of step S2 in an embodiment of the present invention. As shown in FIG. 2, the determining, according to the image, whether the grass in the area in the forward direction of the robot mower includes missed grass, so as to control the moving direction of the robot mower, may include the following detailed steps:
S21. Process the image.

Parallax processing, edge extraction, color segmentation, and the like are performed on the first image and the second image to obtain a processed image.

S22. Determine, according to predetermined elements included in a first portion and a second portion of the processed image respectively, whether the grass includes missed grass, where the first portion and the second portion are independent of each other and have equal area.

Specifically, the first portion and the second portion may be two portions divided by a vertical centerline of the processed image as a dividing line. It can be understood that the first portion corresponds to an image on a left side in the forward direction of the robot mower, and the second portion corresponds to an image on a right side in the forward direction of the robot mower. The predetermined element includes a quantity of pixels having values greater than a set threshold. The feature parameters may be parameters of features such as color and contour. Statistics on quantities of pixels having values greater than the set threshold, included in the first portion and the second portion of the processed image respectively, are collected, and whether the grass includes missed grass is determined according to the statistical results.

S23. Control the robot mower to move towards a direction in which one of the first portion and the second portion includes the missed grass.

If it is determined according to the statistical results that the grass includes missed grass, that is, if it is determined according to the statistical results that there is missed grass on the area where the robot mower needs to cut grass, the robot mower is controlled to move towards the direction in which one of the first portion and the second portion includes the missed grass, that is, the robot mower is controlled to move towards missed grass.

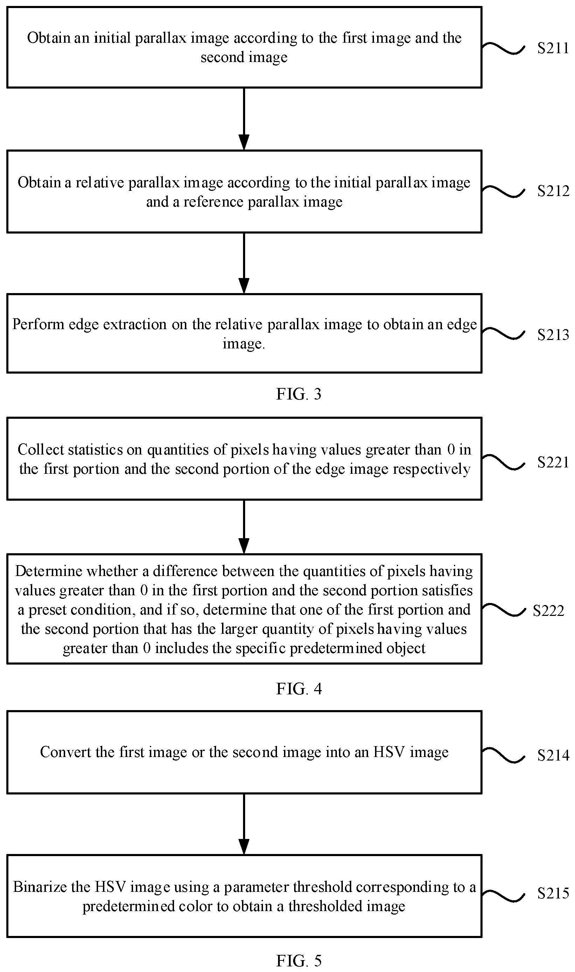

FIG. 3 is a flowchart of implementation steps of step S21 in an embodiment of the present invention. As shown in FIG. 2, the processing the image includes the following detailed steps:
S211. Obtain an initial parallax image according to the first image and the second image.

In this step, the technical means used to obtain the initial parallax image according to the first image and the second image is a conventional technology, and will not be elaborated here.

S212. Obtain a relative parallax image according to the initial parallax image and a reference parallax image.

Specifically, the reference parallax image is first obtained, and then absolute values of differences between values of corresponding pixels in the initial parallax image and the reference parallax image are calculated to generate the relative parallax image.

The reference parallax image may be obtained by capturing, by the first image module and the second image module of the visual module, a level ground to obtain level images respectively, and then processing the level images.

S213. Perform edge extraction on the relative parallax image to obtain an edge image.

Notably, image edges are the most basic features of an image, and edges refer to image edges with abrupt changes in gray-scale information of local characteristics of the image.

Specifically, edge extraction is performed on the aforementioned relative parallax image to obtain the edge image.

FIG. 4 is a flowchart of implementation steps of step S22 in an embodiment of the present invention. As shown in FIG. 4, the determining, according to predetermined elements included in a first portion and a second portion of the processed image respectively, whether the grass includes missed grass, includes the following detailed steps:
S221. Collect statistics on quantities of pixels having values greater than 0 in the first portion and the second portion of the edge image respectively, where the first portion and the second portion are symmetrical about a center of the edge image.
S222. Determine whether a difference between the quantities of pixels having values greater than 0 in the first portion and the second portion satisfies a preset condition, and if so, determine that one of the first portion and the second portion that has the larger quantity of pixels having values greater than 0 includes the missed grass. The preset condition is as follows: the quantity of pixels in one of the first portion and the second portion that has the larger quantity of pixels having values greater than 0 is a preset multiple of the quantity of pixels in the other of the first portion and the second portion that has the smaller quantity of pixels having values greater than 0.

Specifically, the edge image is the aforementioned processed image, and statistics on the quantities of pixels having values greater than 0 in the first portion and the second portion of the edge image are collected respectively, where the first portion and the second portion may be divided by the vertical centerline of the processed image as a dividing line, and the first portion and the second portion are symmetrical about the center of the edge image. If the quantity of pixels in one of the first portion and the second portion that has the larger quantity of pixels having values greater than 0 is the preset multiple of the quantity of pixels in the other of the first portion and the second portion that has the smaller quantity of pixels having values greater than 0, it is determined that one of the first portion and the second portion that has the larger quantity of pixels having values greater than 0 includes missed grass. The preset multiple may be 1.5 times.

FIG. 5 is a flowchart of obtaining a thresholded image in an embodiment of the present invention. As shown in FIG. 5, the processing the image further includes the following steps:
S214. Convert the first image or the second image into an HSV (Hue, Saturation, Value) image.

In this step, any one of the first image or the second image is first converted into an HSV image.

S215. Binarize the HSV image using a parameter threshold corresponding to a predetermined color to obtain a thresholded image, where the predetermined color is consistent with a color of the grass.

Specifically, the color of the grass may be a green color of lawn grass, and the predetermined color consistent with the color of the predetermined object is also a green color. The parameter threshold corresponding to the color consistent with the color of the grass is obtained, and then the HSV image is binarized based on the parameter threshold to obtain the thresholded image, where the values of pixels at the parameter threshold become 255, and the values of remaining pixels become 0.

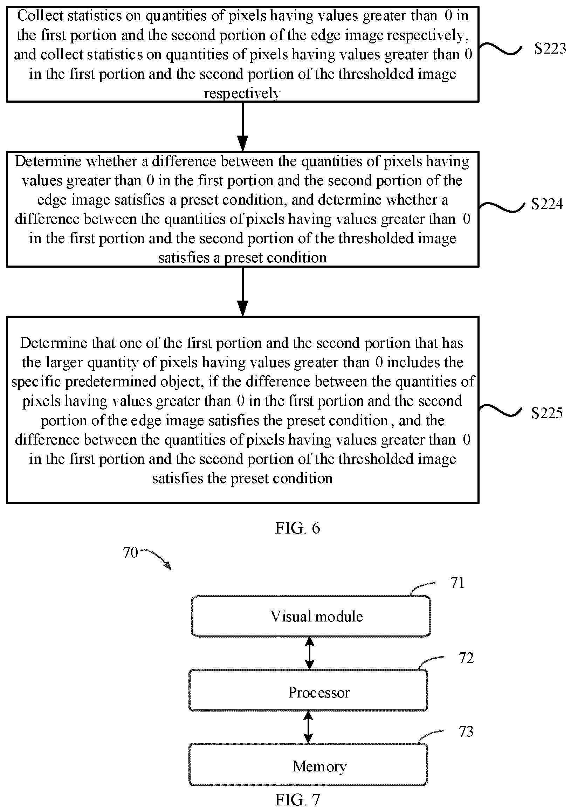

FIG. 6 is another flowchart of implementation steps of step S22 in an embodiment of the present invention. As shown in FIG. 6, the determining, according to predetermined elements included in a first portion and a second portion of the processed image respectively, whether the grass includes missed grass, may include the following detailed steps:
S223. Collect statistics on quantities of pixels having values greater than 0 in the first portion and the second portion of the edge image respectively, and collect statistics on quantities of pixels having values greater than 0 in the first portion and the second portion of the thresholded image respectively.

Specifically, first of all, both the edge image and the thresholded image may be used as the aforementioned processed image. Then, each image is divided into two portions according to the vertical centerline as a dividing line, the portions on the same side are regarded as a group, and the whole is divided into a first portion and a second portion.

Statistics on the quantities of pixels having values greater than 0 in the first portion and the second portion of the edge image are collected, and statistics on the quantities of pixels having values greater than 0 in the first portion and the second portion of the thresholded image are collected, respectively.

S224. Determine whether a difference between the quantities of pixels having values greater than 0 in the first portion and the second portion of the edge image satisfies a preset condition, and determine whether a difference between the quantities of pixels having values greater than 0 in the first portion and the second portion of the thresholded image satisfies a preset condition.

The preset condition is as follows: the quantity of pixels in one of the first portion and the second portion that has the larger quantity of pixels having values greater than 0 is a preset multiple of the quantity of pixels in the other of the first portion and the second portion that has the smaller quantity of pixels having values greater than 0.

S225. Determine that one of the first portion and the second portion that has the larger quantity of pixels having values greater than 0 includes missed grass, if the difference between the quantities of pixels having values greater than 0 in the first portion and the second portion of the edge image satisfies the preset condition, and the difference between the quantities of pixels having values greater than 0 in the first portion and the second portion of the thresholded image satisfies the preset condition.

It is determined that one of the first portion and the second portion that has the larger quantity of pixels having values greater than 0 includes missed grass, if the difference between the quantities of pixels having values greater than 0 in the first portion and the second portion of the edge image satisfies the preset condition, and the difference between the quantities of pixels having values greater than 0 in the first portion and the second portion of the thresholded image satisfies the preset condition.

According to the technical solutions of the embodiments of the present invention, an image of an area in a forward direction of the robot mower is obtained in the moving process of the robot mower; and whether grass in the area in the forward direction of the robot mower includes missed grass is determined according to the image to control the moving direction of the robot mower to process the missed grass, such as cut high grass, so as to process missed grass in an effective and timely manner and prevent the missed grass from growing taller and spreading to require manual processing.

FIG. 7 shows a schematic structural diagram of a robot mower 70 that can be used to implement the embodiments of the present invention. The components shown herein, their connections and relationships, and their functions are merely examples, and are not intended to limit the implementation of the present invention described and/or required herein.

As shown in FIG. 7, the robot mower 70 includes a visual module 71, at least one processor 72, and a memory 73 connected to the at least one processor 72 by communication, where the visual module 71 can obtain image information in a forward direction of the robot mower 70, and the processor 72 can perform various methods and processes described above, such as the control method for a robot mower:
obtaining, in the moving process of the robot mower, an image of an area in the forward direction of the robot mower; and
determining, according to the image, whether grass in the area in the forward direction of the robot mower includes missed grass, so as to control the moving direction of the robot mower.

It should be understood that steps may be reordered, added, or deleted based on various forms of procedures shown above. For example, the steps described in the present application may be performed in parallel, sequentially, or in different orders. As long as the results desired by the technical solutions of the present invention can be achieved, no limitation is imposed herein.

## Claims

1. A control method for a robot mower for controlling the robot mower to move in a designated area to process grass in the designated area, comprising:
obtaining, in the moving process of the robot mower, a first image of the area in the forward direction of the robot mower using a first image module and a second image of the area in the forward direction of the robot mower using a second image module; and
determining, according to the image, whether the grass in the area in the forward direction of the robot mower includes missed grass in the designated area which is higher than surrounding grass, **characterised by**
processing the image by:
obtaining an initial parallax image according to the first image and the second image;
obtaining a relative parallax image according to the initial parallax image and a reference parallax image; and
performing edge extraction on the relative parallax image to obtain an edge image; and
determining whether the grass includes missed grass by collecting statistics on quantities of pixels having values greater than 0 in a first portion and a second portion of the edge image respectively, wherein the first portion and the second portion are symmetrical about a center of the edge image, are independent of each other and have equal area; and
determining whether a difference between the quantities of pixels having values greater than 0 in the first portion and the second portion satisfies a preset condition, and if so, determining that the one of the first portion and the second portion that has the larger quantity of pixels having values greater than 0 includes missed grass; so as to control a moving direction of the robot mower.

2. The control method according to claim 1, wherein the processing the image includes:
converting the first image or the second image into an HSV image; and
binarizing the HSV image using a parameter threshold corresponding to a predetermined color to obtain a thresholded image, wherein the predetermined color is consistent with a color of the predetermined object.

3. The control method according to claim 2, wherein the determining, according to predetermined elements included in a first portion and a second portion of the processed image respectively, whether the grass includes missed grass, includes:
collecting statistics on quantities of pixels having values greater than 0 in the first portion and the second portion of the edge image respectively, and collecting statistics on quantities of pixels having values greater than 0 in the first portion and the second portion of the thresholded image respectively;
determining whether a difference between the quantities of pixels having values greater than 0 in the first portion and the second portion of the edge image satisfies a preset condition, and determining whether a difference between the quantities of pixels having values greater than 0 in the first portion and the second portion of the thresholded image satisfies a preset condition; and
determining that one of the first portion and the second portion that has the larger quantity of pixels having values greater than 0 includes the specific predetermined object, if the difference between the quantities of pixels having values greater than 0 in the first portion and the second portion of the edge image satisfies the preset condition, and the difference between the quantities of pixels having values greater than 0 in the first portion and the second portion of the thresholded image satisfies the preset condition.

4. The control method according to claim 1 or 3, wherein the preset condition is as follows: the quantity of pixels in one of the first portion and the second portion that has the larger quantity of pixels having values greater than 0 is a preset multiple of the quantity of pixels in the other of the first portion and the second portion that has the smaller quantity of pixels having values greater than 0.

5. The control method according to claim 1 or 3, wherein the controlling the moving direction of the robot mower includes:
controlling the robot mower to move towards a direction in which one of the first portion and the second portion includes the missed grass.

6. A robot mower (70), wherein the robot mower (70) includes:
a visual module (71);
at least one processor (72); and
a memory (73) connected to the at least one processor (72) by communication, wherein
the memory (73) stores a computer program that can be executed by the at least one processor (72), and the computer program is executed by the at least one processor (72), so that the at least one processor (72) can perform the control method for a robot mower (70) according to any one of claims 1-5.

## Patentansprüche

1. Ein Steuerungsverfahren für einen Mähroboter zum Steuern des Mähroboters, sodass er sich in einem vorgesehenen Bereich bewegt, um Gras in dem vorgesehenen Bereich zu verarbeiten, beinhaltend:
Erhalten, in dem Bewegungsprozess des Mähroboters, eines ersten Bildes des Bereichs in der Vorwärtsrichtung des Mähroboters unter Verwendung eines ersten Bildmoduls und eines zweiten Bildes des Bereichs in der Vorwärtsrichtung des Mähroboters unter Verwendung eines zweiten Bildmoduls; und
Bestimmen, gemäß dem Bild, ob das Gras in dem Bereich in der Vorwärtsrichtung des Mähroboters verfehltes Gras in dem vorgesehenen Bereich umfasst, das höher als umgebendes Gras ist, **gekennzeichnet durch** das Verarbeiten des Bildes **durch**:
Erhalten eines anfänglichen Parallaxenbildes gemäß dem ersten Bild und dem zweiten Bild;
Erhalten eines relativen Parallaxenbildes gemäß dem anfänglichen Parallaxenbild und einem Referenzparallaxenbild; und
Durchführen von Kantenextraktion an dem relativen Parallaxenbild, um ein Kantenbild zu erhalten; und
Bestimmen, ob das Gras verfehltes Gras umfasst, **durch** Sammeln von Statistiken über Mengen von Pixeln mit Werten größer als 0 in einem ersten Abschnitt bzw. einem zweiten Abschnitt des Kantenbildes, wobei der erste Abschnitt und der zweite Abschnitt symmetrisch um eine Mitte des Kantenbildes sind, voneinander unabhängig sind und eine gleiche Fläche aufweisen; und
Bestimmen, ob eine Differenz zwischen den Mengen von Pixeln mit Werten größer als 0 in dem ersten Abschnitt und dem zweiten Abschnitt eine voreingestellte Bedingung erfüllt, und wenn dem so ist, Bestimmen, dass der eine von dem ersten Abschnitt und dem zweiten Abschnitt, der die größere Menge von Pixeln mit Werten größer als 0 aufweist, verfehltes Gras umfasst; um eine Bewegungsrichtung des Mähroboters zu steuern.

2. Steuerungsverfahren gemäß Anspruch 1, wobei das Verarbeiten des Bildes Folgendes umfasst:
Umwandeln des ersten Bildes oder des zweiten Bildes in ein HSV-Bild; und Binarisieren des HSV-Bildes unter Verwendung eines Parameterschwellenwerts, der einer vorgegebenen Farbe entspricht, um ein schwellenwertbearbeitetes Bild zu erhalten, wobei die vorgegebene Farbe mit einer Farbe des vorgegebenen Objekts übereinstimmt.

3. Steuerungsverfahren gemäß Anspruch 2, wobei das Bestimmen, gemäß vorgegebenen Elementen, die in einem ersten Abschnitt bzw. einem zweiten Abschnitt des verarbeiteten Bildes umfasst sind, ob das Gras verfehltes Gras umfasst, Folgendes umfasst:
Sammeln von Statistiken über Mengen von Pixeln mit Werten größer als 0 in dem ersten Abschnitt bzw. dem zweiten Abschnitt des Kantenbildes und Sammeln von Statistiken über Mengen von Pixeln mit Werten größer als 0 in dem ersten Abschnitt bzw. dem zweiten Abschnitt des schwellenwertbearbeiteten Bildes;
Bestimmen, ob eine Differenz zwischen den Mengen von Pixeln mit Werten größer als 0 in dem ersten Abschnitt und dem zweiten Abschnitt des Kantenbildes eine voreingestellte Bedingung erfüllt, und Bestimmen, ob eine Differenz zwischen den Mengen von Pixeln mit Werten größer als 0 in dem ersten Abschnitt und dem zweiten Abschnitt des schwellenwertbearbeiteten Bildes eine voreingestellte Bedingung erfüllt; und
Bestimmen, dass einer von dem ersten Abschnitt und dem zweiten Abschnitt, der die größere Menge von Pixeln mit Werten größer als 0 aufweist, das spezifische vorgegebene Objekt umfasst, wenn die Differenz zwischen den Mengen von Pixeln mit Werten größer als 0 in dem ersten Abschnitt und dem zweiten Abschnitt des Kantenbildes die voreingestellte Bedingung erfüllt und die Differenz zwischen den Mengen von Pixeln mit Werten größer als 0 in dem ersten Abschnitt und dem zweiten Abschnitt des schwellenwertbearbeiteten Bildes die voreingestellte Bedingung erfüllt.

4. Steuerungsverfahren gemäß Anspruch 1 oder 3, wobei die voreingestellte Bedingung wie folgt ist: die Menge von Pixeln in einem von dem ersten Abschnitt und dem zweiten Abschnitt, der die größere Menge von Pixeln mit Werten größer als 0 aufweist, ist ein voreingestelltes Vielfaches der Menge von Pixeln in dem anderen von dem ersten Abschnitt und dem zweiten Abschnitt, der die kleinere Menge von Pixeln mit Werten größer als 0 aufweist.

5. Steuerungsverfahren gemäß Anspruch 1 oder 3, wobei das Steuern der Bewegungsrichtung des Mähroboters Folgendes umfasst:
Steuern des Mähroboters, sodass er sich in eine Richtung bewegt, in der einer von dem ersten Abschnitt und dem zweiten Abschnitt das verfehlte Gras umfasst.

6. Ein Mähroboter (70), wobei der Mähroboter (70) Folgendes umfasst:
ein visuelles Modul (71);
mindestens einen Prozessor (72); und
einen Speicher (73), der durch Kommunikation mit dem mindestens einen Prozessor (72) verbunden ist, wobei
der Speicher (73) ein Computerprogramm speichert, das durch den mindestens einen Prozessor (72) ausgeführt werden kann, und das Computerprogramm durch den mindestens einen Prozessor (72) ausgeführt wird, sodass der mindestens eine Prozessor (72) das Steuerungsverfahren für einen Mähroboter (70) gemäß einem der Ansprüche 1-5 durchführen kann.

## Revendications

1. Un procédé de commande pour une tondeuse robot destiné à commander la tondeuse robot pour qu'elle se déplace dans une zone désignée pour couper de l'herbe dans la zone désignée, comprenant :
l'obtention, dans le processus de déplacement de la tondeuse robot, d'une première image de la zone dans le sens de la marche de la tondeuse robot au moyen d'un premier module image et d'une deuxième image de la zone dans le sens de la marche de la tondeuse robot au moyen d'un deuxième module image ; et
la détermination, en fonction de l'image, du fait qu'il y a ou non, dans l'herbe dans la zone dans le sens de la marche de la tondeuse robot, de l'herbe qui a été manquée dans la zone désignée et qui est plus haute que l'herbe environnante, **caractérisé par** le traitement de l'image par :
obtention d'une image de parallaxe initiale en fonction de la première image et de la deuxième image ;
obtention d'une image de parallaxe relative en fonction de l'image de parallaxe initiale et d'une image de parallaxe de référence ; et
réalisation d'une extraction de bord sur l'image de parallaxe relative afin d'obtenir une image de bord ; et
la détermination du fait qu'il y a ou non, dans l'herbe, de l'herbe qui a été manquée par collecte de statistiques sur des quantités de pixels ayant des valeurs supérieures à 0 dans une première portion et une deuxième portion de l'image de bord respectivement, dans lequel la première portion et la deuxième portion sont symétriques par rapport à un centre de l'image de bord, sont indépendantes l'une de l'autre et ont la même aire ; et
la détermination du fait qu'une différence entre les quantités de pixels ayant des valeurs supérieures à 0 dans la première portion et la deuxième portion satisfait ou non à une condition prédéfinie, et si c'est le cas, la détermination du fait que la portion d'entre la première portion et de la deuxième portion qui a la plus grande quantité de pixels ayant des valeurs supérieures à 0 inclut de l'herbe qui a été manquée ; de façon à commander un sens de déplacement de la tondeuse robot.

2. Le procédé de commande selon la revendication 1, dans lequel le traitement de l'image inclut :
la conversion de la première image ou de la deuxième image en une image TSV ; et
la binarisation de l'image TSV en utilisant un seuil de paramètre correspondant à une couleur prédéterminée afin d'obtenir une image seuillée, la couleur prédéterminée étant cohérente avec une couleur de l'objet prédéterminé.

3. Le procédé de commande selon la revendication 2, dans lequel la détermination, en fonction d'éléments prédéterminés inclus dans une première portion et une deuxième portion de l'image traitée respectivement, du fait qu'il y a ou non de l'herbe qui a été manquée, inclut :
la collecte de statistiques sur des quantités de pixels ayant des valeurs supérieures à 0 dans la première portion et la deuxième portion de l'image de bord respectivement, et la collecte de statistiques sur des quantités de pixels ayant des valeurs supérieures à 0 dans la première portion et la deuxième portion de l'image seuillée respectivement ;
la détermination du fait qu'une différence entre les quantités de pixels ayant des valeurs supérieures à 0 dans la première portion et la deuxième portion de l'image de bord satisfait ou non à une condition prédéfinie, et la détermination du fait qu'une différence entre les quantités de pixels ayant des valeurs supérieures à 0 dans la première portion et la deuxième portion de l'image seuillée satisfait ou non à une condition prédéfinie ; et
la détermination du fait qu'une portion d'entre la première portion et la deuxième portion qui a la plus grande quantité de pixels ayant des valeurs supérieures à 0 inclut l'objet prédéterminé spécifique, si la différence entre les quantités de pixels ayant des valeurs supérieures à 0 dans la première portion et la deuxième portion de l'image de bord satisfait à la condition prédéfinie, et si la différence entre les quantités de pixels ayant des valeurs supérieures à 0 dans la première portion et la deuxième portion de l'image seuillée satisfait à la condition prédéfinie.

4. Le procédé de commande selon la revendication 1 ou la revendication 3, dans lequel la condition prédéfinie est la suivante : la quantité de pixels dans une portion d'entre la première portion et la deuxième portion qui a la plus grande quantité de pixels ayant des valeurs supérieures à 0 est un multiple prédéfini de la quantité de pixels dans l'autre portion d'entre la première portion et la deuxième portion qui a la plus petite quantité de pixels ayant des valeurs supérieures à 0.

5. Le procédé de commande selon la revendication 1 ou la revendication 3, dans lequel la commande du sens de déplacement de la tondeuse robot inclut :
la commande de la tondeuse robot pour qu'elle se déplace dans un sens dans lequel une portion d'entre la première portion et la deuxième portion inclut l'herbe qui a été manquée.

6. Une tondeuse robot (70), la tondeuse robot (70) incluant :
un module visuel (71) ;
au moins un processeur (72) ; et
une mémoire (73) connectée à l'au moins un processeur (72) par communication, dans laquelle
la mémoire (73) stocke un programme informatique qui peut être exécuté par l'au moins un processeur (72), et le programme informatique est exécuté par l'au moins un processeur (72), de sorte que l'au moins un processeur (72) peut réaliser le procédé de commande pour une tondeuse robot (70) selon l'une quelconque des revendications 1 à 5.
